(19) Europäisches Patentamt / European Patent Office / Office européen des brevets

(11) **EP 4 339 563 B1**

(12) **EUROPEAN PATENT SPECIFICATION**

(45) Date of publication and mention
of the grant of the patent:
**31.12.2025 Bulletin 2026/01**

(21) Application number: **23197194.6**

(22) Date of filing: **13.09.2023**

(51) International Patent Classification (IPC):
*G01F 23/2962* (2022.01)   *F17C 13/02* (2006.01)
*F17C 13/12* (2006.01)

(52) Cooperative Patent Classification (CPC):
**G01F 23/2962; F17C 13/021;** F17C 2201/0109;
F17C 2201/054; F17C 2203/0391; F17C 2203/0629;
F17C 2221/012; F17C 2223/0161; F17C 2223/033;
F17C 2250/0417; F17C 2260/024; F17C 2270/0189

(54) **LIQUID MEASUREMENT SYSTEMS AND METHODS**

FLÜSSIGKEITSMESSSYSTEME UND -VERFAHREN

SYSTÈMES ET PROCÉDÉS DE MESURE DE LIQUIDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **13.09.2022 US 202217944119**

(43) Date of publication of application:
**20.03.2024 Bulletin 2024/12**

(73) Proprietor: **Simmonds Precision Products, Inc.
Vergennes, VT 05491 (US)**

(72) Inventors:
• BHUIYAN, Yeasin
  Vergennes, 05491 (US)
• CARINI, Peter J.
  Williston, 05495 (US)
• WALDO, Page
  South Berwick, 03908 (US)

(74) Representative: **Dehns
10 Old Bailey
London EC4M 7NG (GB)**

(56) References cited:
WO-A1-2020/094221    US-A1- 2016 274 234
US-A1- 2021 404 990    US-A1- 2022 196 514

**Description**

## BACKGROUND OF THE INVENTION

### 1. Field of the Invention

The present disclosure relates to liquid quantity in tanks and more particularly to determining liquid hydrogen quantity in tanks with liquid level measurements.

### 2. Description of Related Art

Maintaining extremely low temperature and low pressure inside liquid hydrogen tanks on an aircraft is very important. Any amount of direct energy entering the liquid hydrogen tanks can cause an increase in in-tank temperature and pressure, hence, risking tank damage or explosion. Traditional fuel measurement systems require some amount of direct electrical energy entering the tank for operation, making them undesirable for liquid hydrogen gauging in certain applications.

The conventional techniques have been considered satisfactory for their intended purpose. However, there is an ever present need for improved liquid hydrogen gauging. This disclosure provides a solution for this need.

US 2022/196514 discloses a system and method for monitoring and reporting liquid nitrogen container level.

## SUMMARY OF THE INVENTION

According to the invention, there is provided a liquid level measurement system as claimed in claimed 1.

In some embodiments, the wave guide strip includes a metallic material and/or a composite material. The wave guide strip can extend longitudinally from the first end to the second end and defines a longitudinal axis.

The liquid level measurement system can include a space between the second end of the wave guide strip and the second side of the tank. The wave guide strip can be positioned perpendicular to the outer tank wall. The sensor array can include at least one transmitter and at least one receiver. The sensor array and the wave guide strip can be configured and adapted to withstand cryogenic temperatures ranging from -431°F to -423°F (-257°C to -253°C).

In accordance with another invention, there is provided a method for determining a liquid level measurement in a fluid tank as claimed in claim 9.

In some embodiments, the at least one reflected wave includes at least one reflected wave reflected at a liquid-gas interface within the fluid tank back towards the sensor array. Determining the liquid level within the tank can include correlating a time-of-flight and a wave speed of the at least one reflected wave to a flight length of the at least one reflected wave. Determining the liquid level within the tank can include correlating the flight length to the liquid level.

In some embodiments, determining the liquid level within the tank can include correlating an amplitude of the at least one reflected wave to the liquid level. Determining the liquid level within the tank can include correlating a waveform of the at least one reflected wave to the liquid level.

In some embodiments, the at least one reflected wave includes at least one reflected new wavemode reflected from a second end of the wave guide strip back towards the sensor array. Determining the liquid level within the tank can include correlating a quantity of the at least one reflected new wavemode to the liquid level.

These and other features of the systems and methods of the subject disclosure will become more readily apparent to those skilled in the art from the following detailed description of the preferred embodiments taken in conjunction with the drawings.

## BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:

Fig. 1 is a schematic depiction of an aircraft including a portion of a liquid level measurement system constructed in accordance with an embodiment of the present disclosure, showing liquid hydrogen tanks in the fuselage of the aircraft;

Fig. 2 is a schematic depiction of a liquid level measurement system outside of the scope of the present disclosure, showing a schematic cross-section of a liquid hydrogen tank with a wave guide strip and a sensor array;

Fig. 3A is a schematic depiction of a liquid level measurement system outside of the scope of the present disclosure, showing a schematic cross-section of a liquid hydrogen tank oriented vertically;

Fig. 3B is an embodiment of the liquid level measurement system of Fig. 3A, showing the end of the wave guide strip and the sensor array inside the vacuum jacket;

Fig. 4 is a schematic depiction of the wave guide strip of Fig. 2, showing the first and second ends of the strip;

Fig. 5 is a schematic depiction of a portion of the liquid level measurement system of Fig. 2, schematically showing the guided waves excited from the sensor array and leakage along the wave guide strip;

Figs. 6A-6C are schematic depictions of sensor arrays for use in the liquid level measurement system of Fig. 2, showing the transmitters and receivers of the sensor arrays;

Fig. 7 is a graphical depiction of the relationship between guided wave leakage and liquid level and guided wave amplitude and liquid level as determined in accordance with an embodiment of the present disclosure;

Fig. 8 is a graphical depiction of the relationship between new wave modes and liquid level as determined in accordance with an embodiment of the present disclosure; and

Fig. 9 is a flow chart in accordance with an embodiment of a method for determining a liquid level measurement in a fluid tank in accordance with the present disclosure.

## DETAILED DESCRIPTION OF THE PREFERRED EMBODIMENTS

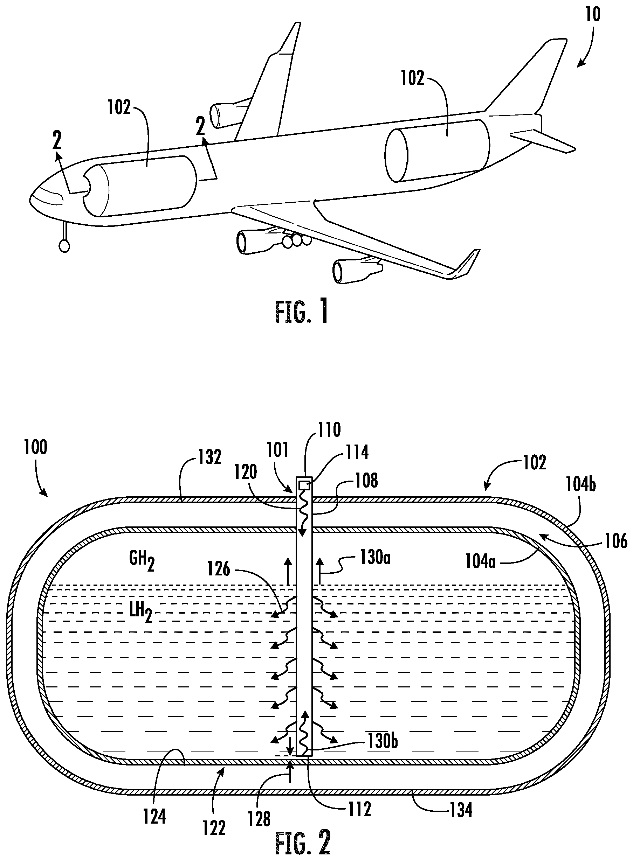

Reference will now be made to the drawings wherein like reference numerals identify similar structural features or aspects of the subject disclosure. For purposes of explanation and illustration, and not limitation, a schematic view of a liquid level measurement system outside of the scope of the disclosure is shown in Fig. 2 and is designated generally by reference character 100. Embodiments of the liquid level measurement system in accordance with the disclosure, or aspects thereof, are provided in Figs. 1, 3B and 4-9 as will be described. The systems and methods described herein provide for liquid hydrogen gauging using ultrasonic guided wave (GW) probes that are is noninvasive and intrinsically safer than other traditional gauging methods.

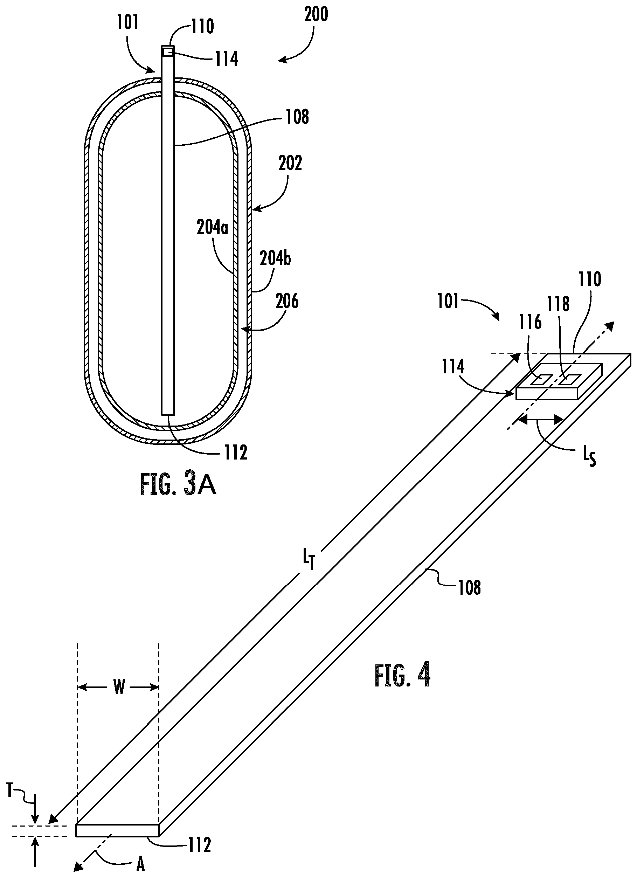

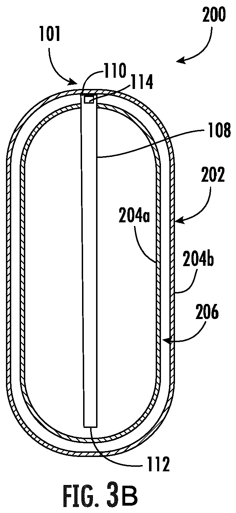

As shown in Fig. 1, an aircraft 10 can include a plurality of fuel tanks 102, e.g. liquid hydrogen ($LH_2$) fuel tanks. These tanks 102 can have a variety of shapes and be positioned in a variety of locations in a given aircraft 10. Fig. 1 shows two generally cylindrical $LH_2$ tanks 102 placed front and rear section of aircraft 10 to balance their weight. The tanks 102 are placed horizontally. However, those skilled in the art will readily appreciate that in a different type of aircraft, tanks 102 maybe placed vertically, like the cross-section shown in Figs. 3A and 3B, or the tanks may be spherical tanks such that the vertical and horizontal orientations are geometrically the same.

As shown in Fig. 2, a liquid level measurement system 100 includes tank 102, e.g. a $LH_2$ tank, having two wall layers 104a and 104b (inner tank wall 104a and outer tank wall 104b) separated by a vacuum jacket 106. The system 100 includes a GW probe 101 that is inserted into $LH_2$ tank 102 to measure the $LH_2$ level. The GW probe includes a wave guide strip 108 including a first end 110 and a second end 112. First end 110 of probe 101 is the same as the first end of strip 108. Second end 112 of probe 101 is the same as the second end of strip 108. First end 110 of the wave guide strip 108 is outside of fluid tank 102 on a first side 132 of tank 102. As shown in Fig. 3B, first end 110 and hence sensor array 114 exist inside the vacuum jacket. Second end 112 of wave guide strip 108 extends toward a second side 124 of tank 102 and is more proximate second side 124 of tank 102 than the first side of the tank. GW probe 101 includes sensor array 114 positioned more proximate to first end 110 than second end 112. Together, wave guide strip 108 and sensor array 114 are referred to as GW probe 101. GW probe 101 is securely attached to the inner tank wall 104a using a mounting system. In accordance with some embodiments, it is contemplated that a buffer and thermal isolation between a perimeter of second end of strip 108 and outer tank wall 104b can be used. Additionally, there may be a cap on first end 110 for protection and thermal isolation. In Figs. 2-3A, sensor array 114 is positioned outside the outer tank wall 104b of tank 102 (outer tank wall 204b of tank 202). In Fig. 3B, sensor array 114 and the first end 110 are positioned within an outer tank wall 204b, but outside of an inner tank wall 204a, everything else about the system in Fig. 3B is the same as that of system 200 in Fig. 3A, described in more detail below. Wave guide strip 108 functions to guide waves emitted from sensor array 114, thereby generating guided waves, e.g. ultrasonic guided waves, schematically shown by arrow 120. As described in more detail below, wave guide strip 108 and sensor array 114 are configured and adapted to sustain the cryogenic temperature inside tank 102.

With continued reference to Fig 2, in some tanks 102, e.g. a liquid hydrogen tank, there are two phases of hydrogen: $LH_2$ and gaseous hydrogen ($GH_2$). The $GH_2$ is essentially the hydrogen vapor occupying the empty space of the inner tank. There is a tremendous density difference between $GH_2$ and $LH_2$. At gas-liquid equilibrium pressure, the $GH_2$ has density of about 1 kg/m3 while the $LH_2$ has a density of about 71 kg/m3. This density difference affects the guided wave propagation through wave guide strip 108 differently in the GH2 and LH2. Waveguide strip 108 is oriented vertically into horizontal tank 102 and is positioned perpendicular to the outer tank wall 104b. First end 110 of GW probe 101 (including GW sensor array 114) remains outside tank 102 while second end 112 of probe 101 reaches near to a bottom 122 of tank 102 as illustrated in Fig. 2, but second end 112 does not touch the inner surface 124 of bottom 122 of tank 102. Instead, a space 128 is defined between inner surface 124 and second end 112. Essentially, second (bottom) end 112 of GW probe 101 should be at the aircraft "reserve" fuel line (empty line).

As shown in Fig. 2, when tank 102 is partially filled with $LH_2$, part of strip 108 will be surrounded by the $LH_2$ which will cause the wave leakage schematically shown by arrows 126, discussed in more detail below. When the tank is empty or near empty, the wave guide strip 108 is not in contact with any $LH_2$ and therefore, does not have any wave leakage 126. In other words, the less the wave leakage 126, the lower the $LH_2$ in tank 102.

With reference now to Fig. 3A, a vertical tank 202 is shown as part of another liquid level measurement system 200. System 200 is the same as system 100 except that tank 202 is oriented vertically with respect to gravity. Vertical tank 202 includes two wall layers 204a and 204b (the inner tank wall 204a and the outer tank wall 204b) separated by a vacuum jacket 206. System 200 is shown with GW probe 101, as previously described in detail above. As contemplated with other tank designs, such as spherical tanks, the GW probe 101 is still be oriented vertically (with respect to gravity) in the $LH_2$ tank 202 with first end 110 of the probe 101 (including the GW sensor array 114) remaining outside tank 202 while second end 112 of the probe 101 reaches near to the bottom of the tank 202. The advantage of using this GW probe 101 is that the same wave leakage principle applies for different kinds of tank designs (horizontal, vertical, and spherical). However, the liquid quantity calculations (to determine volume and mass of the liquid) are different for each shape and can be obtained mathematically, once the liquid level within a given tank shape is measured.

With reference now to Figs. 2 and 4, sensor array 114 includes at least one transmitter 116 and at least one receiver 118. Those skilled in the art will readily appreciate that sensor array 114 can include a housing, resin or the like in which transmitter 116 and receiver 118 are contained within or mounted on. Transmitter 116 excites ultrasonic guided waves 120 that propagate through wave guide strip 108 and undergo various changes when they come in contact with the $LH_2$. Wave guide strip 108 is a metallic material strip or composite material strip that acts as a waveguide for waves, e.g. waves 120, excited from transmitter 116 of sensor array 114. Metals can tend to conduct heat away from the liquid. As such, in some embodiments, thermal properties of composites may be more desirable when it is necessary to trade-off GW transmissibility with thermal isolation properties. Those skilled in the art will readily appreciate that transmitter 116 can also be configured to be a receiver when it is not in transmitting mode, meaning that only one block would represent both the transmitter 116 and receiver 118. Receiver 118 captures these guided wave changes by measuring the reflected waveforms, shown schematically by arrows 130a and 130b, which carry the $LH_2$ level information. By analyzing the measured waveforms 130a and 130b, the $LH_2$ level can be determined.

With reference to Fig. 4, the sensor array 114 and wave guide strip 108 are configured and adapted to withstand cryogenic temperatures. In accordance with some embodiments, this includes withstanding temperatures ranging from -431°F to-423°F (-257°C to -253°C, 6K and 20K), which is generally the temperature at which the fuel is kept. In general, the pressure inside the tank is below 2-3 bar. Wave guide strip 108 extends longitudinally from first end 110 to second end 112 and defines a longitudinal axis A. In accordance with an embodiment, the wave guide strip 108 is made of aluminum 5083 alloy. This alloy offers excellent stability in cryogenic temperatures. It can be used in extremely low temperatures, e.g., as low as 3K (-270°C, -454°F). The application in $LH_2$ gauging is limited to 14K (melting point of hydrogen). At cryogenic temperature, this wave guide strip 108 has increased ultimate tensile and yield strength without compromising the impact strength. It also retains is toughness and does not exhibit ductile-to-brittle transition at this extreme low temperature. Wave guide strip 108 is a very good waveguide with very low wave dissipation and with a very high wavespeed. The shape of the waveform is consistently maintained because of aluminum 5083's low wave dissipation property and therefore, this waveguide is an excellent medium for offering accurate $LH_2$ gauging. Aluminum 5083 also offers fast measurements because of the high wavespeed in the waveguide.

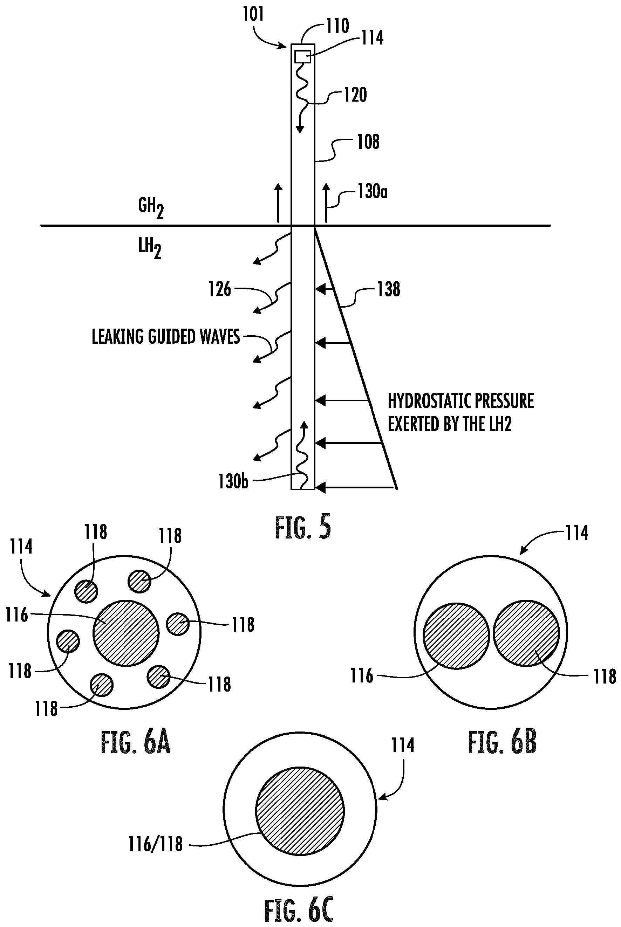

With reference now to Figs. 6A-6C, various sensor array 114 configurations in a GW probe 101 can be used for any of the methods of determining the liquid level within the fluid tank 102 described herein. In the embodiment of Fig. 6A, sensor array 114 includes a central transmitter 116 with six receivers 118 positioned around the periphery thereof. In this configuration, the center transmitter 116 only transmits GW into the wave guide strip 108 thus acting as a source of GW. The center transmitter is not capable of sensing any GW from the probe. The six receivers 118 are dedicated for sensing the waveforms from the wave guide strip 108.

As shown in Fig. 6B, sensor array 114 includes a transmitter 116 side-by-side with receiver 118. In this configuration, the transmitter acts as a source of GW and the sensor senses the GW from the probe. It is also contemplated that the embodiment of Fig. 6B can also include multiple receivers 118 in the sensor array 114 in a line perpendicular to the direction of propagation along GW strip 108. In Fig. 6C, sensor array 114 includes a single transducer unit 116/118. In this configuration, the same transducer acts as transmitter (source) and receiver (sensor). When the transducer acts as a transmitter and when it acts as a sensor can be controlled programmatically. All the above sensor configurations can be used for measuring the LH2 level in the system 100 using the methods described below. Those skilled in the art will readily appreciate that the embodiments of Figs. 6A-6B can be used interchangeably with one another in probe 101 or can be used together. There are also a variety of other suitable arrangements for transmitters 116 and receivers 118. For example, there can be a plurality of transmitters 116 and a plurality of receivers 118 in an array 114.

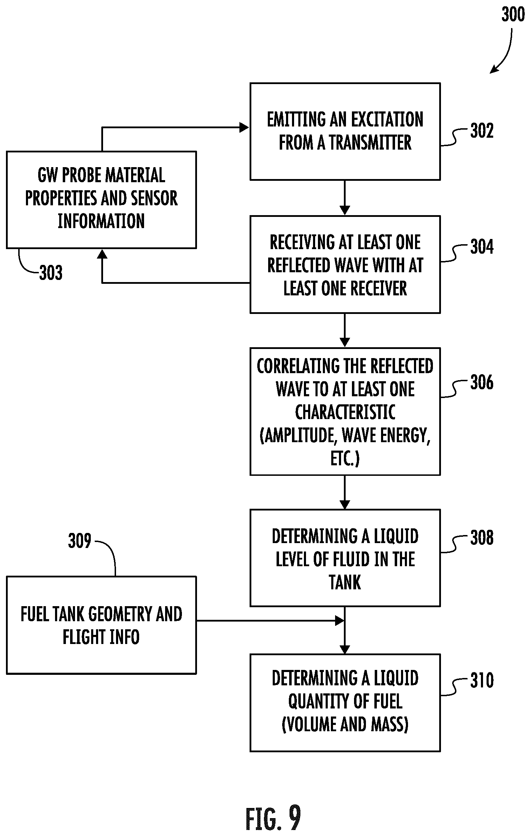

With reference now to Fig. 9, a method 300 for determining a liquid level measurement in a fluid tank, e.g. tank 102, includes emitting an excitation from a transmitter, e.g. transmitter 116, of a sensor array, e.g. sensor array 114, on a GW probe, e.g. probe 101, along a wave guide strip, e.g. wave guide strip 108, into the fluid tank, schematically shown by box 302. This thereby generates a plurality of guided waves, e.g., those shown schematically by arrows 120 in Figs. 2 and 5. Hence, the transmitter acts as the source of the guided waves. The shape of the excitation can vary (i.e., square, sinusoidal, toneburst, etc.).

With continued reference to Fig. 9, the method includes receiving at least one reflected wave, e.g. those reflected waves shown schematically by arrows 130a and 130b in Figs. 2 and 5, with at least one receiver of the sensor array, as schematically shown by box 304. The method includes correlating the reflected wave to at least one characteristic, as schematically shown by box 306. The method includes determining a liquid level within the fluid tank by correlating at least one characteristic of the at least one reflected wave to a liquid level in the fluid tank, as schematically shown by box 308. As described below, systems and methods of the present disclosure include several embodiments of determining the liquid level of fluid in the tank, box 308.

In one embodiment of method 300, the at least one reflected wave includes at least one reflected wave reflected at a liquid-gas interface within the fluid tank back towards the sensor array, e.g. reflected wave 130a. The acoustic impedance at the interface of the $GH_2$ and $LH_2$ is high (1:70) which can cause a strong guided wave reflection. Determining a characteristic of the reflected wave, and thereby the liquid level within the tank, includes correlating a time-of-flight and a wave speed of at least one reflected wave to a flight length of the reflected wave, e.g. a characteristic of the reflected wave. Determining the liquid level within the tank includes correlating the flight length to the liquid level. The time-of-flight ($T_f$) for a reflected guided wave from the $GH_2$ - $LH_2$ interface can be measured by analyzing the waveforms. Once the wavespeed of the wave packets are calculated and the time-of-flight is measured, the flight length (L) of the wave packets can be determined. Hence, the $LH_2$ level can be determined. The wave guide strip is thin enough to produce Lamb wave type guided waves in the wave guide strip. The wavespeed of Lamb waves follows the following characteristic equation:

$$\frac{tan\eta_p d}{tan\eta_s d} = -\left[\frac{(\xi^2 - \eta_s^2)^2}{4\xi^2 \eta_p \eta_s}\right]^{\pm 1}$$

where +1 signifies for the symmetric Lamb waves and -1 signifies for the antisymmetric Lamb waves. The above equation is a transcendental equation, because pressure and shear wavenumbers, $n_p$ and $n_s$, respectively, also depend on the wavenumber ($\xi$). The above characteristic equation can be solved for the wavenumber $\xi$ and subsequently, the wavespeed c for the symmetric and antisymmetric Lamb waves can be deduced. The wavespeed c is important since it is used for the time-of-flight (TOF) method of $LH_2$ level determination. The wavespeed is mathematically related to the flight length and the time-of-flight as follows:

$$c = L/T_f$$

Where c is the wavespeed, and L is the flight length. The $LH_2$ level (LL) can be determined using the following relation:

$$LL = L_T - L - L_S$$

where $L_T$ is the total bar length, and $L_S$ is the distance between the center of the sensor array and the nearest edge of the wave guide strip, shown schematically in Fig. 4. From this correlation, the $LH_2$ level measurement can be determined, as schematically shown with box 308

The reflected wave includes at least one reflected wave reflected from a second end, e.g. second end 112, of the wave guide strip back towards the sensor array, e.g. reflected wave 130b. After emission, the guided wave excited from the transmitter propagates through the wave guide strip at a wavespeed of about 5,000 m/s (11,185 mph) for symmetric waves and about 1,800 m/s (4,026 mph) for the antisymmetric waves. When the guided wave reaches a gas-liquid interface, e.g. interface of $GH_2$ and $LH_2$, wave leakage, e.g. leakage shown schematically by arrows 126, begins. More and more wave leakage occurs as the GW travels deeper into the liquid in the tank, e.g. $LH_2$. The sourcing guided waves travel all the way to the second end of the wave guide strip and are reflected toward the transmitter (source), as illustrated in Fig. 5. For the reflected guided wave, e.g. reflected wave 130b, the wave leakage also occurs which is again a function of the $LH_2$ level. The solid-liquid boundary conditions also affect the amount of wave leakage into the liquid medium. As the $LH_2$ level rises, the more hydrostatic pressure, indicated schematically by group of horizontally facing arrows 138 in Fig. 5, is exerted on the wave guide strip. Correlating at least one characteristic of the reflected wave 130b includes measuring the amplitude and/or wave energy to generate the at least one characteristic by correlating the measured wave to at least one characteristic (e.g., amplitude, wave energy, etc.), as shown schematically by box 306. The method includes correlating the measured amplitude or the measured energy (e.g. the characteristic) to a liquid level in the fluid tank, as schematically shown by box 308. Correlating the measured amplitude or the measured waveform to the liquid level, discussed in more detail below, includes determining the amount of wave leakage based on the measured wave energy, which can subsequently be used to determine the liquid level in the tank, as shown schematically by box 308.

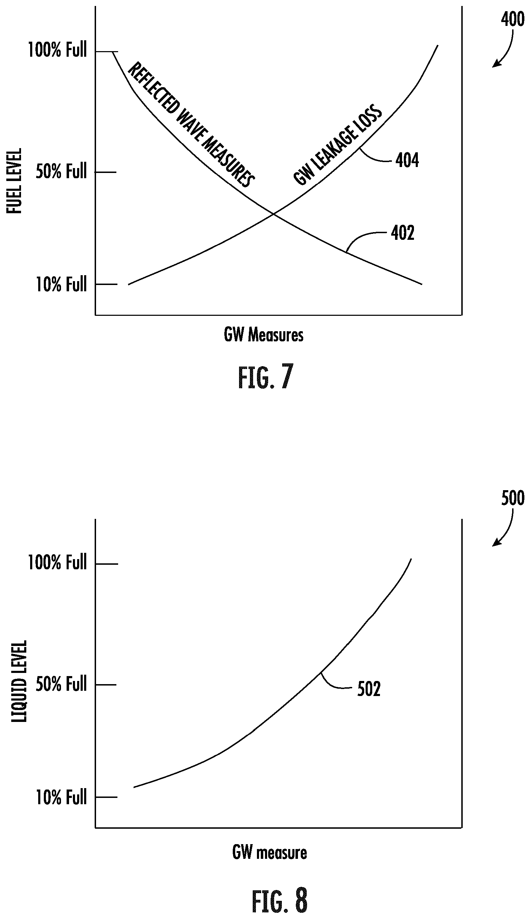

With continued reference to Fig. 9, when measuring reflected waves 130b, the amplitude and/or wave energy of reflected waves 130b can be measured and analyzed, as shown schematically by box 306. In some embodiments, determining the liquid level within the tank includes correlating an amplitude of the at least one reflected wave 130b to the liquid level, as shown schematically by box 308. As discussed above, the GW traveling through the bar leaks waves all along the area

surrounded by $LH_2$ as illustrated in Fig. 5. The emitted guided waves make an outbound flight from the transmitter of the sensor array to the second end of the wave guide strip and an inbound flight from the second end of the wave guide strip back to the sensor array. When the wave guide strip is surrounded by $LH_2$, the amplitude of waveform of the guide waves initially emitted decreases because a portion of the guided waves leak into the liquid. This occurs during both outbound and inbound flights. However, little to no amplitude reduction occurs in the portion of the wave guide strip surrounded by $GH_2$, because the acoustic impedance of $GH_2$ is very low. This correlation between amplitude, leakage loss and liquid level is shown by reflected wave curve 402 and leakage loss curve 404 in a chart 400 of Fig. 7. From this correlation, the $LH_2$ level measurement can be determined, as schematically shown with box 308.

With continued reference to Fig. 9, in another embodiment, when measuring reflected waves 130b, the wave energy of reflected waves 130b can be measured and analyzed, as shown schematically by box 306. Determining the liquid level within the tank includes correlating a energy of the at least one reflected wave 130b to the liquid level, as shown schematically by box 308. The GW leakage loss can be calculated from the waveform measurements. GW reflection occurs as the traveling guided waves hit the second end of the wave guide strip. The reflected guided waves travel back toward the GW sensor array. The amount of GW reflection can be represented in terms of GW measures., e.g., maximum amplitude, RMS amplitude, and energy envelope. The reflected guided waves are confined in the waveguide; however, they experience a certain level of interaction with the $LH_2$ and $GH_2$. As an example, the reflected guided waves dampen more in the $LH_2$ than that in the $GH_2$. These GW measures can be correlated with the $LH_2$ level and a general trend of the GW measures for GW leakage loss is illustrated in Fig. 7. It shows that the amount of GW leakage loss increases as the GW measures decrease, and that the $LH_2$ level decreases as the GW measures decrease. Based on this correlation, the $LH_2$ level measurement can be determined, as schematically shown with box 308

With continued reference to Fig. 9, in another embodiment, the at least one reflected wave includes at least one reflected new wavemode. Because of high acoustic impedance at the $GH_2$- $LH_2$ interface, a mode conversion is expected. In other words, sourcing guided waves travel through the wave guide strip, hit the $GH_2$- $LH_2$ interface, and reflect back as reflected waves, e.g. reflected waves 130a, spawned at the $GH_2$- $LH_2$ interface. At the second end of the wave guide strip an additional mode conversion is expected and one or more new wavemode can be generated and reflected back as reflected waves, e.g. reflected waves 130b. All these new wavemode are the function of the $LH_2$ level. In this embodiment, when measuring reflected waves, a new wave mode of reflected waves can be measured and analyzed. Determining the liquid level within the tank includes correlating a quantity of the at least one reflected new wavemode to the liquid level. This relationship is depicted in chart 500 of Fig. 8.

The GW measures can be calculated for the new wave modes, and they can be correlated with the $LH_2$ level. A general trend of the GW measures for the new wavemode is illustrated by curve 502 in the chart 500 of Fig. 8. Curve 502 shows that the amount of new wavemode increases as the $LH_2$ level rises. From this correlation, the $LH_2$ level measurement can be determined, as schematically shown with box 308

With continued reference to Fig. 9, after determining a liquid level of fluid in the tank using one of the above described methods, method 300 includes determining a liquid quantity (volume and/or mass), as indicated schematically by box 310, by gathering the fuel tank geometry and the aircraft flight information such as angle of attack, temperature, pressure, etc., as indicated schematically by box 309, and combining it with the liquid level data. Method 300 includes storing waveform data, as indicated schematically by box 303, after receiving at least one reflected wave. In accordance with some embodiments of method 300, the GW probe's material properties, geometric information, and the sensor information, can be used to inform the emitting method, and the like.

The methods and systems of the present disclosure, as described above and shown in the drawings, provides guided wave (GW) measurement probes for liquid hydrogen gauging with superior properties including that it is noninvasive and intrinsically safer than other traditional gauging methods. The GW probes in accordance with systems and methods of the present invention are applicable to a wide varieties of liquid hydrogen ($LH_2$) tank designs and physical orientation (e.g., horizontal, or vertical) in an aircraft, or the like. The GW probes in accordance with systems and methods of the present invention are robust and can easily sustain the $LH_2$ cryogenic environment, as compared with other traditional methods inject electric power into the $LH_2$ tank which raises the temperature and pressure inside the tank whereas this GW probe won't affect the cryogenic $LH_2$ environment at all. While the apparatus and methods of the subject disclosure have been shown and described with reference to preferred embodiments, those skilled in the art will readily appreciate that changes and/or modifications may be made thereto without departing from the scope of the subject disclosure.

**Claims**

1. A liquid level measurement system (200) comprising:

    a fluid tank (202) comprising:

a first side of the fluid tank (202);
a second side of the fluid tank (202) opposite the first side of the fluid tank (202);
an inner tank wall (204a);
an outer tank wall (204b) enclosing the inner tank wall (204a); and
a vacuum jacket (206) between the inner tank wall (204a) and the outer tank wall (204b);

a wave guide strip (108) comprising:

a first end (110) positioned outside of the inner tank wall (204a), inside of the outer tank wall (204b), and within the vacuum jacket (206) on the first side of the fluid tank; and
a second end (112) positioned within the fluid tank (202), the second end (112) extending toward the second side of the fluid tank (202) and being more proximate the second side of the fluid tank (202) than the first side of the fluid tank (202); and

a sensor array (114) positioned more proximate to the first end (110) than the second end (112) such that the sensor array (114) is positioned within the vacuum, wherein the wave guide strip (108) is configured and adapted to guide waves emitted from the sensor array (114) to the second end (112) of the wave guide strip (108) and to guide waves reflected from the second end (112) of the wave guide strip (108) back to the sensor array (114).

2. The liquid level measurement system (200) as recited in claim 1, wherein the wave guide strip (108) extends longitudinally from the first end (110) to the second end (112) and defines a longitudinal axis; and/or wherein the wave guide strip (108) includes at least one of a metallic material or a composite material.

3. The liquid level measurement system (200) as recited in claim 1 or 2, wherein the wave guide strip (108) is attached to the inner tank wall (204a).

4. The liquid level measurement system (100) as recited in claim 1, further comprising a space between the second end (112) of the wave guide strip (108) and the second side (124) of the tank (102).

5. The liquid level measurement system (200) as recited in claim 1, wherein the wave guide strip (108) is positioned perpendicular to the outer tank wall (204b).

6. The liquid level measurement system (200) as recited in any preceding claim, wherein the sensor array (114) and the wave guide strip (108) are configured and adapted to withstand cryogenic temperatures ranging from -431°F to -423°F (-257°C to -253°C); and/or wherein the sensor array (114) includes at least one transmitter (116) and at least one receiver (118).

7. A method for determining a liquid level measurement in a fluid tank (202), the method comprising:

emitting an excitation from a transmitter (116) of a sensor array (114) along a wave guide strip (108) into the fluid tank (202), thereby generating a plurality of guided waves, wherein the wave guide strip (108) includes a first end (110) and a second end (112), the first end (110) being positioned outside of an inner tank wall (204a), inside of an outer tank wall (204b), and within a vacuum jacket (206), and the second end (112) being positioned within the fluid tank (202), and wherein the sensor array (114) is positioned on the first end (110) of the wave guide strip (108), such that the sensor array is positioned within the vacuum;
receiving at least one reflected wave with at least one receiver (118) of the sensor array (108), wherein the at least one receiver (118) is configured to receive the at least one reflected wave reflected from the second end (112) of the wave guide strip (108) back towards the sensor array (114); and
determining a liquid level within the fluid tank (202) by correlating at least one characteristic of the at least one reflected wave to a liquid level in the fluid tank (202).

8. The method as recited in claim 7, wherein the at least one reflected wave includes at least one reflected wave reflected at a liquid-gas interface within the fluid tank (202) back towards the sensor array (114).

9. The method as recited in claim 7 or 8, wherein determining the liquid level within the fluid tank (202) includes correlating a time-of-flight and a wave speed of the at least one reflected wave to a flight length of the at least one reflected wave, and wherein determining the liquid level within the fluid tank (202) includes correlating the flight length to the liquid level.

10. The method as recited in any one of claims 7-9, wherein determining the liquid level within the fluid tank (202) includes correlating an amplitude of the at least one reflected wave to the liquid level; and/or wherein determining the liquid level within the fluid tank (202) includes correlating a waveform of the at least one reflected wave to the liquid level.

**11.** The method as recited in any one of claims 7-10, wherein the at least one reflected wave includes at least one reflected new wavemode reflected from a second end (112) of the wave guide strip (108) back towards the sensor array (114); optionally wherein determining the liquid level within the fluid tank (202) includes correlating a quantity of the at least one reflected new wavemode to the liquid level.

**Patentansprüche**

**1.** Flüssigkeitspegelmesssystem (200), umfassend:
einen Fluidtank (202), umfassend:

eine erste Seite des Fluidtanks (202);
eine zweite Seite des Fluidtanks (202) gegenüber der ersten Seite des Fluidtanks (202);
eine innere Tankwand (204a);
eine äußere Tankwand (204b), die die innere Tankwand (204a) umschließt; und
einen Vakuummantel (206) zwischen der inneren Tankwand (204a) und der äußeren Tankwand (204b);
einen Wellenleiterstreifen (108), umfassend:

ein erstes Ende (110), das außerhalb der inneren Tankwand (204a), innerhalb der äußeren Tankwand (204b) und innerhalb des Vakuummantels (206) auf der ersten Seite des Fluidtanks positioniert ist; und
ein zweites Ende (112), das innerhalb des Fluidtanks (202) positioniert ist, wobei sich das zweite Ende (112) in Richtung der zweiten Seite des Fluidtanks (202) erstreckt und näher an der zweiten Seite des Fluidtanks (202) als an der ersten Seite des Fluidtanks (202) ist; und
ein Sensorarray (114), das derart näher an dem ersten Ende (110) als an dem zweiten Ende (112) positioniert ist, dass das Sensorarray (114) innerhalb des Vakuums positioniert ist, wobei der Wellenleiterstreifen (108) konfiguriert und angepasst ist,
um von dem Sensorarray (114) emittierte Wellen zu dem zweiten Ende (112) des Wellenleiterstreifens (108) zu leiten und von dem zweiten Ende (112) des Wellenleiterstreifens (108) reflektierte Wellen zurück zu dem Sensorarray (114) zu leiten.

**2.** Flüssigkeitspegelmesssystem (200) nach Anspruch 1, wobei sich der Wellenleiterstreifen (108) längs von dem ersten Ende (110) zu dem zweiten Ende (112) erstreckt und eine Längsachse definiert; und/oder wobei der Wellenleiterstreifen (108) mindestens eines von einem metallischen Material oder einem Verbundmaterial beinhaltet.

**3.** Flüssigkeitspegelmesssystem (200) nach Anspruch 1 oder 2, wobei der Wellenleiterstreifen (108) an der inneren Tankwand (204a) befestigt ist.

**4.** Flüssigkeitspegelmesssystem (100) nach Anspruch 1, ferner umfassend einen Raum zwischen dem zweiten Ende (112) des Wellenleiterstreifens (108) und der zweiten Seite (124) des Tanks (102).

**5.** Flüssigkeitspegelmesssystem (200) nach Anspruch 1, wobei der Wellenleiterstreifen (108) senkrecht zu der äußeren Tankwand (204b) positioniert ist.

**6.** Flüssigkeitspegelmesssystem (200) nach einem der vorhergehenden Ansprüche, wobei das Sensorarray (114) und der Wellenleiterstreifen (108) konfiguriert und angepasst sind, um kryogenen Temperaturen in einem Bereich von -431 °F bis -423 °F (-257 °C bis -253 °C) standzuhalten; und/oder wobei das Sensorarray (114) mindestens einen Sender (116) und mindestens einen Empfänger (118) beinhaltet.

**7.** Verfahren zum Bestimmen einer Flüssigkeitspegelmessung in einem Fluidtank (202), wobei das Verfahren Folgendes umfasst:

Emittieren einer Anregung von einem Sender (116) eines Sensorarrays (114) entlang eines Wellenleiterstreifens (108) in den Fluidtank (202), wodurch eine Vielzahl von geleiteten Wellen erzeugt wird, wobei der Wellenleiterstreifen (108) ein erstes Ende (110) und ein zweites Ende (112) beinhaltet, wobei das erste Ende (110) außerhalb einer inneren Tankwand (204a), innerhalb einer äußeren Tankwand (204b) und innerhalb eines Vakuummantels (206) positioniert ist und das zweite Ende (112) innerhalb des Fluidtanks (202) positioniert ist und wobei das Sensorarray (114) derart an dem ersten Ende (110) des Wellenleitstreifens (108) positioniert ist, dass das Sensorarray innerhalb des Vakuums positioniert ist;
Empfangen mindestens einer reflektierten Welle mit mindestens einem Empfänger (118) des Sensorarrays (108), wobei der mindestens eine Empfänger (118) konfiguriert ist, um die mindestens eine reflektierte Welle zu empfangen, die von dem zweiten Ende (112) des Wellenleiterstreifens (108) zurück in Richtung des Sensorarrays (114) reflektiert wird; und
Bestimmen eines Flüssigkeitspegels innerhalb des Fluidtanks (202) durch Korrelieren mindestens eines Merkmals der mindestens einen reflektierten Welle mit einem Flüssigkeitspegel in dem Fluidtank (202).

**8.** Verfahren nach Anspruch 7, wobei die mindestens eine reflektierte Welle mindestens eine Welle beinhaltet, die an einer Flüssigkeits-Gas-Schnittstelle innerhalb des Fluidtanks (202) zurück in Richtung des Sensorarrays (114) reflektiert wird.

9. Verfahren nach Anspruch 7 oder 8, wobei das Bestimmen des Flüssigkeitspegels innerhalb des Fluidtanks (202) ein Korrelieren einer Flugzeit und einer Wellengeschwindigkeit der mindestens einen reflektierten Welle mit einer Fluglänge der mindestens einen reflektierten Welle beinhaltet und wobei das Bestimmen des Flüssigkeitspegels innerhalb des Fluidtanks (202) ein Korrelieren der Fluglänge mit dem Flüssigkeitspegel beinhaltet.

10. Verfahren nach einem der Ansprüche 7 bis 9, wobei das Bestimmen des Flüssigkeitspegels innerhalb des Fluidtanks (202) ein Korrelieren einer Amplitude der mindestens einen reflektierten Welle mit dem Flüssigkeitspegel beinhaltet; und/oder wobei das Bestimmen des Flüssigkeitspegels innerhalb des Fluidtanks (202) ein Korrelieren einer Wellenform der mindestens einen reflektierten Welle mit dem Flüssigkeitspegel beinhaltet.

11. Verfahren nach einem der Ansprüche 7-10, wobei die mindestens eine reflektierte Welle mindestens einen reflektierten neuen Wellentyp beinhaltet, der von einem zweiten Ende (112) des Wellenleiterstreifens (108) zurück in Richtung des Sensorarrays (114) reflektiert wird; wobei das Bestimmen des Flüssigkeitspegels innerhalb des Fluidtanks (202) optional ein Korrelieren einer Menge des mindestens einen reflektierten neuen Wellentyps mit dem Flüssigkeitspegel beinhaltet.

**Revendications**

1. Système de mesure de niveau de liquide (200) comprenant :
   un réservoir de fluide (202) comprenant :

   un premier côté du réservoir de fluide (202) ;
   un second côté du réservoir de fluide (202) opposé au premier côté du réservoir de fluide (202);
   une paroi interne de réservoir (204a) ;
   une paroi externe de réservoir (204b) entourant la paroi interne de réservoir (204a) ; et
   une chemise à vide (206) entre la paroi interne de réservoir (204a) et la paroi externe de réservoir (204b) ;
   une bande de guide d'ondes (108) comprenant :

   une première extrémité (110) positionnée à l'extérieur de la paroi interne de réservoir (204a), à l'intérieur de la paroi externe de réservoir (204b) et à l'intérieur de la chemise à vide (206) sur le premier côté du réservoir de fluide ; et
une seconde extrémité (112) positionnée à l'intérieur du réservoir de fluide (202), la seconde extrémité (112) s'étendant vers le second côté du réservoir de fluide (202) et étant plus proche du second côté du réservoir de fluide (202) que du premier côté du réservoir de fluide (202) ; et
un réseau de capteurs (114) positionné plus proche de la première extrémité (110) que de la seconde extrémité (112) de sorte que le réseau de capteurs (114) soit positionné à l'intérieur du vide, dans lequel la bande de guide d'ondes (108) est configurée et adaptée pour guider des ondes émises à partir du réseau de capteurs (114) vers la seconde extrémité (112) de la bande de guide d'ondes (108) et pour guider des ondes réfléchies à partir de la seconde extrémité (112) de la bande de guide d'ondes (108) vers le réseau de capteurs (114).

2. Système de mesure de niveau de liquide (200) selon la revendication 1, dans lequel la bande de guide d'ondes (108) s'étend longitudinalement de la première extrémité (110) vers la seconde extrémité (112) et définit un axe longitudinal ; et/ou dans lequel la bande de guide d'ondes (108) comporte au moins l'un d'un matériau métallique ou d'un matériau composite.

3. Système de mesure du niveau de liquide (200) selon la revendication 1 ou 2, dans lequel la bande de guide d'ondes (108) est fixée à la paroi interne de réservoir (204a).

4. Système de mesure du niveau de liquide (100) selon la revendication 1, comprenant en outre un espace entre la second extrémité (112) de la bande de guide d'ondes (108) et le second côté (124) du réservoir (102).

5. Système de mesure du niveau de liquide (200) selon la revendication 1, dans lequel la bande de guide d'ondes (108) est positionnée perpendiculairement à la paroi externe de réservoir (204b).

6. Système de mesure de niveau de liquide (200) selon l'une quelconque revendication précédente, dans lequel le réseau de capteurs (114) et la bande de guide d'ondes (108) sont configurés et adaptés pour résister à des températures cryogéniques allant de -431 °F à -423 °F (-257 °C à -253 °C) ; et/ou dans lequel le réseau de capteurs (114) comporte au moins un émetteur (116) et au moins un récepteur (118).

**7.** Procédé de détermination d'une mesure de niveau de liquide dans un réservoir de fluide (202), le procédé comprenant :

l'émission d'une excitation à partir d'un émetteur (116) d'un réseau de capteurs (114) le long d'une bande de guide d'ondes (108) dans le réservoir de fluide (202), générant ainsi une pluralité d'ondes guidées, dans lequel la bande de guide d'ondes (108) comporte une première extrémité (110) et une seconde extrémité (112), la première extrémité (110) étant positionnée à l'extérieur d'une paroi interne de réservoir (204a), à l'intérieur d'une paroi externe de réservoir (204b) et à l'intérieur d'une chemise à vide (206),
et la seconde extrémité (112) étant positionnée à l'intérieur du réservoir de fluide (202), et dans lequel le réseau de capteurs (114) est positionné sur la première extrémité (110) de la bande de guide d'ondes (108), de sorte que le réseau de capteurs soit positionné à l'intérieur du vide ;
la réception d'au moins une onde réfléchie avec au moins un récepteur (118) du réseau de capteurs (108), dans lequel l'au moins un récepteur (118) est configuré pour recevoir l'au moins une onde réfléchie renvoyée à partir de la seconde extrémité (112) de la bande de guide d'ondes (108) vers le réseau de capteurs (114) ; et
la détermination d'un niveau de liquide à l'intérieur du réservoir de fluide (202) en corrélant au moins une caractéristique de l'au moins une onde réfléchie à un niveau de liquide dans le réservoir de fluide (202).

**8.** Procédé selon la revendication 7, dans lequel l'au moins une onde réfléchie comporte au moins une onde réfléchie renvoyée au niveau d'une interface liquide-gaz à l'intérieur du réservoir de fluide (202) vers le réseau de capteurs (114).

**9.** Procédé selon la revendication 7 ou 8, dans lequel la détermination du niveau de liquide à l'intérieur du réservoir de fluide (202) comporte la corrélation d'un temps de vol et d'une vitesse d'onde de l'au moins une onde réfléchie avec une longueur de vol de l'au moins une onde réfléchie, et dans lequel la détermination du niveau de liquide à l'intérieur du réservoir de fluide (202) comporte la corrélation de la longueur de vol avec le niveau de liquide.

**10.** Procédé selon l'une quelconque des revendications 7 à 9, dans lequel la détermination du niveau de liquide à l'intérieur du réservoir de fluide (202) comporte la corrélation d'une amplitude de l'au moins une onde réfléchie avec le niveau de liquide ; et/ou dans lequel la détermination du niveau de liquide à l'intérieur du réservoir de fluide (202) comporte la corrélation d'une forme d'onde l'au moins une onde réfléchie avec le niveau de liquide.

**11.** Procédé selon l'une quelconque des revendications 7 à 10, dans lequel l'au moins une onde réfléchie comporte au moins un nouveau mode d'onde réfléchi renvoyé à partir d'une seconde extrémité (112) de la bande de guide d'ondes (108) vers le réseau de capteurs (114) ; optionnellement, dans lequel la détermination du niveau de liquide à l'intérieur du réservoir de fluide (202) comporte la corrélation d'une quantité de l'au moins un nouveau mode d'onde réfléchi avec le niveau de liquide.

FIG. 1

FIG. 2

FIG. 3A

FIG. 4

FIG. 3B

FIG. 5

GH₂

LH₂

LEAKING GUIDED WAVES

HYDROSTATIC PRESSURE
EXERTED BY THE LH2

FIG. 6A

FIG. 6B

FIG. 6C

FIG. 7

FIG. 8

300

EMITTING AN EXCITATION
FROM A TRANSMITTER ⟝302

GW PROBE MATERIAL
PROPERTIES AND SENSOR
INFORMATION

303

RECEIVING AT LEAST ONE
REFLECTED WAVE WITH AT
LEAST ONE RECEIVER ⟝304

CORRELATING THE REFLECTED
WAVE TO AT LEAST ONE
CHARACTERISTIC
(AMPLITUDE, WAVE ENERGY,
ETC.) ⟝306

309

FUEL TANK GEOMETRY AND
FLIGHT INFO

DETERMINING A LIQUID
LEVEL OF FLUID IN THE
TANK ⟝308

DETERMINING A LIQUID
QUANTITY OF FUEL
(VOLUME AND MASS) ⟝310

FIG. 9

**REFERENCES CITED IN THE DESCRIPTION**

**Patent documents cited in the description**

- US 2022196514 A